Europäisches Patentamt

European Patent Office

Office européen des brevets

(11) Veröffentlichungsnummer: **0 411 190 A1**

## (12) EUROPÄISCHE PATENTANMELDUNG

(21) Anmeldenummer: 89114383.6

(22) Anmeldetag: 03.08.89

(51) Int. Cl.⁵: **B62M 9/08**, F16H 29/14

(43) Veröffentlichungstag der Anmeldung:
06.02.91 Patentblatt 91/06

(84) Benannte Vertragsstaaten:
AT BE CH DE ES FR GB GR IT LI LU NL SE

(71) Anmelder: LOOK S.A.
Rue de la Pique B.P. 72
F-58004 Nevers Cédex(FR)

(72) Erfinder: Mercat, Jean-Pierre
24 rue Gambetta
F-37110 Château Renault(FR)

(74) Vertreter: Dipl.-Phys.Dr. Manitz
Dipl.-Ing.Dipl.-Wirtsch.-Ing. Finsterwald
Dipl.-Phys. Rotermund Dipl.-Chem.Dr. Heyn
B.Sc.(Phys.) Morgan
Robert-Koch-Strasse 1
D-8000 München 22(DE)

(54) Stufenloses Getriebe.

(57) Es wird ein stufenloses Getriebe beschrieben, bei dem ein antreibendes Element und ein anzutreibendes Element exzentrisch zueinander verstellbar und über Schwenkhebel (6) gekuppelt sind, die an einem Element gelagert sind und mit dem anderen Element über Kupplungsschuhe (7) in kraftschlüssigen Klemmeingriff gebracht werden können. Im Rahmen dieser Serienschaltung sind die beiden Übersetzungseinheiten (19, 20) invers zusammengefaßt, wobei eine Exzenterstellvorrichtung vorgesehen ist, die entweder die Organe (2, 11) mit den den Kuppelelementen zugeordneten Ringlaufbahnen (3, 12) oder die Organe mit den Kuppelelementen (7, 14) gemeinsam betätigt. Die kraftübertragenden Eingriffszonen beider Einheiten sind winkelmäßig zueinander versetzt, und die Exzentrizitäten der beiden Einheiten sowie die den Kuppelelementen zugeordneten Hebelarme können so gewählt werden, daß sich optimale, weitgehend fluktuationsfreie Übertragungsverhältnisse ergeben.

Fig. 1

## STUFENLOSES GETRIEBE

Die Erfindung betrifft ein stufenloses Getriebe gemäß dem Oberbegriff des Patentanspruches 1.

Ein derartiges Getriebe ist aus der EP-A2-280 481 bekannt und weist zwei Übersetzungsstufen auf, die zwischen dem antreibenden und einem anzutreibenden Element in Serie geschaltet sind. Das antreibende Element wird bei diesem bekannten Getriebe von der Pedalkurbel eines Fahrrads und das anzutreibende Element von einem dieser Pedalkurbel zugeordneten Zahnkranz gebildet.

Bei allen bekannten stufenlosen Getrieben dieser Art, und zwar auch bei einstufigen Getrieben besteht das Problem, daß aufgrund des jeweils aufeinanderfolgend stattfindenden kraftschlüssigen Eingriffs der Kuppelelemente Geschwindigkeitsschwankungen auftreten, die Torsionsschwingungen verursachen können und unerwünschte Belastungen sowie störende Geräusche zur Folge haben können. Bei Verwendung derartiger stufenloser Getriebe bei Fahrrädern können diese Fluktuationen während des Tretvorgangs auch als störend ruckartig aufeinanderfolgende Bewegungsschwankungen empfunden werden.

Diese bei derartigen Getrieben auftretenen Fluktuationen hängen ab von der Auslegung bzw. Geometrie des jeweiligen Getriebes und insbesondere auch von der Anzahl der verwendeten Übertragungselemente in Form von mit Kuppelelementen versehenen Schwenkhebeln. Je größer die Anzahl solcher Schwenkhebel gewählt werden kann, desto geringer werden die erwähnten Schwankungen, aber eine Erhöhung der Anzahl der Schwenkhebel und Kuppelelemente führt nicht nur zu einer wesentlichen Kostenerhöhung, sondern vor allem auch zu einer Verkomplizierung der Gesamtkonstruktion und auch zu einer Erhöhung des Raumbedarfs, was bei vielen Anwendungsfällen nicht akzeptabel ist. Weiterhin wird von derartigen Getrieben ein möglichst großer Übersetzungsbereich gefordert, wobei im Falle der Verwendung eines einstufigen Getriebes konstruktive Grenzen gegeben sind.

Um den Übersetzungsbereich zu vergrößern, sind gemäß EP-A2-280 481 zwei Übersetzungsstufen in Serie geschaltet. Auf diese Weise gelingt es zwar, einen größeren Übersetzungsbereich zu erhalten, da die mit einer derartigen Serienschaltung erreichbare Gesamtübersetzung etwa dem Produkt der Übersetzungsverhältnisse der beiden Einzelstufen entspricht, aber dabei zeigt sich der wesentliche Nachteil, daß bei einer derartigen Serienschaltung sehr große aperiodische Fluktuationen bzw. Übersetzungsschwankungen im Übertragungsweg zwischen Eingangs- und Ausgangsorgan auftreten.

Aufgabe der Erfindung ist es, ein stufenloses Getriebe der eingangs angegebenen Art bei geringem konstruktiven Aufwand in der Weise auszubilden, daß einerseits ein hoher Übersetzungsbereich erzielt werden kann und andererseits die Fluktuationen bzw. Schwankungen im Übertragungsweg zwischen Eingangsorgan und Ausgangsorgan minimiert und somit störende Auswirkungen derartiger Fluktuationen praktisch ausgeschaltet werden. Außerdem soll das Getriebe einen geringen Raumbedarf besitzen, keine störenden Geräusche entwikkeln und geeignet sein, große Kräfte bzw. Momente zu übertragen.

Ausgehend von dem im Oberbegriff des Patentanspruches 1 beschriebenen stufenlosen Getriebe wird diese Aufgabe nach der Erfindung dadurch gelöst, daß die Übersetzungeinheiten paarweise invers zusammengefaßt sind und jedes Einheitenpaar eine entweder die Organe mit den Ringlaufbahnen oder die Organe mit den Kuppelelementen gemeinsam betätigende Exzenter-Stellvorrichtung aufweist.

Durch die inverse Reihenschaltung zweier Übersetzungseinheiten wird eine prinzipiell mittensymmetrische Anordnung erhalten, wobei das Ausgangsorgan der ersten Stufe und das Eingangsorgan der zweiten Stufe gleiche Periode und gleiche Winkelgeschwindigkeiten besitzen.

Die zweite Übersetzungsstufe wird vorzugsweise so ausgelegt, daß die sich über 360° ergebenden Fluktuationen bzw. Geschwindigkeitsschwankungen beider Übertragungsstufen sehr ähnlich und vorzugsweise identisch sind.

Wenn dann gemäß einer weiteren Besonderheit der Erfindung zwischen den beiden Übersetzungsstufen die jeweiligen Kraftübertragungsbereiche, bei denen die Kuppelorgane kraftschlüssig klemmend mit der jeweils zugeordneten Ringlaufbahn in Eingriff treten, winkelmäßig derart gegeneinander versetzt werden, daß die Geschwindigkeitsmaximas der ersten Stufe zumindest im wesentlichen in Phase sind mit den Geschwindigkeitsminimas der zweiten Stufe, dann werden hinsichtlich der Geschwindigkeitsschwankungen bzw. Fluktuationen Optimalwerte erhalten.

Die durch die Erfindung ermöglichte, zumindest weitestgehende Ausschaltung störender Geschwindigkeitsschwankungen führt auch zu einer Optimierung der Übertragungseigenschaften eines derartigen stufenlosen Getriebes, da bei Gewährleistung eines großen Übersetzungsbereichs störende Torsionsschwingungen und Geräuschbildungen vermieden und gleichzeitig hohe Übertragungsleistungen sichergestellt werden können.

Besonders vorteilhafte Ausgestaltungen der Erfindung sind in den Unteransprüchen angegeben.

Die Erfindung wird nachfolgend unter Bezugnahme auf die Zeichnung näher erläutert; in der Zeichnung zeigt:

Fig. 1 eine schematische Darstellung zur Erläuterung des prinzipiellen Aufbaus eines stufenlosen Getriebes nach der Erfindung,

Fig. 2 eine Axialschnittdarstellung einer Ausführungsform eines zweistufigen Getriebes nach der Erfindung, das in die Hinterradnabe eines Fahrrads integriert ist,

Fig. 3 eine Querschnittsdarstellung des Getriebes nach Fig. 2, wobei der Schnitt durch die erste Übersetzungseinheit verläuft, die sich in der zentrierten Stellung befindet,

Fig. 4 eine der Schnittdarstellung nach Fig. 3 entsprechende Darstellung, wobei sich die erste Exzentereinheit jedoch in der maximal exzentrischen Stellung befindet,

Fig. 5 eine Querschnittsdarstellung des Getriebes nach Fig. 2, wobei die Schnittebene durch die zweite Übersetzungseinheit verläuft, welche sich in der maximal exzentrischen Position befindet, und

Fig. 6 eine schematische Diagrammdarstellung zur Erläuterung des Zusammenwirkens der beiden Übersetzungseinheiten im Hinblick auf die Minimierung von Fluktuationen.

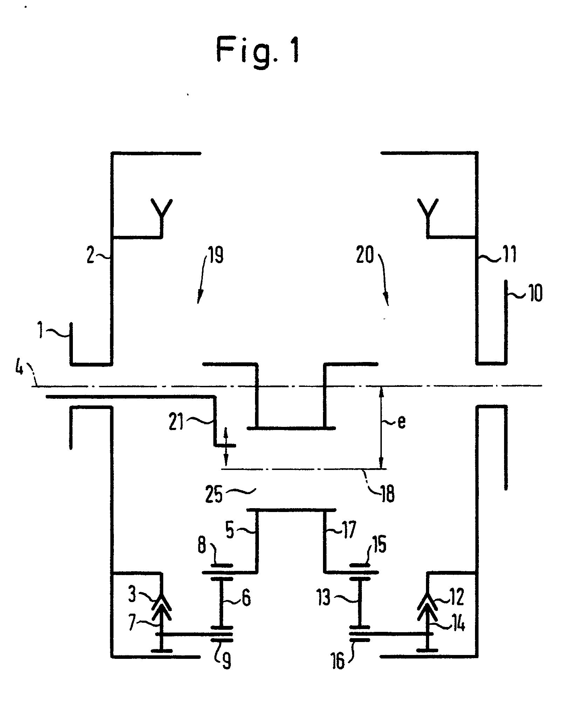

Die schematische Darstellung nach Fig. 1 zeigt eine inverse Serienschaltung zweier Übersetzungseinheiten 19, 20, wobei jede dieser beiden Einheiten für sich betrachtet einen Grundaufbau besitzt, wie er beispielsweise in der französischen Patentanmeldung Nr. 88 12 584 dargestellt und in hinsichtlich seiner Funktion beschrieben ist.

Die erste Übersetzungseinheit 19 besitzt ein antreibendes Element 1, das beispielsweise aus einem Antriebszahnrad eines Fahrrads bestehen kann, und dieses antreibende Element 1 ist mit einem ringtrommelförmigen Eingangsorgan 2 verbunden, das eine schematisch angedeutete erste Ringlaufbahn besitzt. Mit dieser Ringlaufbahn 3 wirken mehrere über den Umfang verteilte, an Schwenkhebeln 6 gelagerte Kuppelelemente 7 zusammen, wobei die an einem Ende jeweils ein Kuppelelement 7 tragenden Schwenkhebel 6 mit ihrem anderen Ende an einem ersten Zwischenorgan 5 gelagert sind. Das ebenfalls drehbar gelagerte Zwischenorgan 5 befindet sich auf einem Exzenterelement 25, dessen Exzentrizität e bezogen auf die feste Achse 4 einstellbar ist.

Die Schwenkhebel 6 erstrecken sich somit jeweils zwischen den Kuppelelementen 7 und dem Zwischenorgan 5 und laufen in einer gemeinsamen Ebene um. Die den Schwenkhebeln 6 zugeordneten Schwenklager 8, 9 sind in der Zeichnung schematisch dargestellt.

Die Kuppelelemente 7 sind vorzugsweise als Klemmschuhe ausgebildet, die form- und kraftschlüssig in die Ringlaufbahn 3 eingreifen können und als ziehend freilaufende und stoßend klemmende Elemente ausgebildet sind, d.h. nur in einer Laufrichtung kraftübertragend wirksam werden können.

Das erste Zwischenorgan 5 stellt den Ausgang der ersten Übersetzungseinheit 19 dar, und auf dem gleichen Exzenterelement 25, auf dem sich dieses erste Zwischenorgan befindet, ist ein zweites Zwischenorgan 17 angeordnet, das das Eingangsorgan der zweiten Übersetzungseinheit 20 darstellt.

Dieses zweite Zwischenorgan 17 ist wiederum über Klemmschuhe 14 tragende Schwenkhebel 13 mit einer zweiten Ringlaufbahn 12 gekuppelt, die an einem ringtrommelförmigen Ausgangsorgan 11 ausgebildet ist, welches das angetriebene Element bilden kann oder fest mit einem angetriebenen Element 10 verbunden ist.

In gleicher Weise wie in der ersten Übersetzungseinheit 19 sind auch in der zweiten Übersetzungseinheit 20 die Schwenkhebel 13 über Lager 15, 16 mit dem zugeordneten Zwischenorgan 17 bzw. den zugeordneten Klemmschuhen 14 verbunden und laufen über den Umfang des Zwischenorgans 17 verteilt in einer Ebene um.

Der beschriebene Aufbau des erfindungsgemäßen Getriebes zeigt, daß dieses Getriebe im Gegensatz zu bekannten Anordnungen mittensymmetrisch ausgebildet ist, wodurch es möglich wird, die sich in den beiden aufeinanderfolgenden Übersetzungseinheiten funktionsbedingt ergebenden Fluktuationen bzw. Geschwindigkeitsschwankungen unter Beibehaltung eines großen Übersetzungsbereichs, der durch das Produkt der Einzelübersetzungen der beiden Übersetzungseinheiten bestimmt ist, zu minimieren.

Die Fluktuationen oder Geschwindigkeitsschwankungen sind bei Getrieben dieser Art bekanntlich eine Folge davon, daß in Abhängigkeit von der eingestellten Exzentrizität, die maßgebend für das jeweilige Übersetzungsverhältnis ist, die Kup plungselemente jeweils nur während eines Teilbereichs ihres gesamten Umlaufs über 360° in kraftschlüssigen Eingriff mit der zugeordneten Ringlaufbahn kommen. Es müssen also die Kupplungselemente nacheinander die Funktion der Kraft- bzw. Momentenübertragung übernehmen und dieses Ein- und Auskoppeln der einzelnen Kuppelelemente sowie die Aufeinanderfolge dieser Kuppelelemente führt zu gewissen Fluktuationen bzw. Geschwindigkeitsschwankungen, die generell unerwünscht sind.

Durch die inverse Serienschaltung von zwei Übersetzungseinheiten, wie sie in Fig. 1 dargestellt ist, lassen sich die Fluktuationen wesentlich verringern, indem die Kuppelelemente 14 der zweiten Übertragungseinheit bezüglich der Kuppelelemente 7 der ersten Übertragungseinheit 19 bezüglich ihres kraftschlüssigen Eingriffs mit der jeweils zugehörigen Ringlaufbahn 3 bzw. 12 winkelmäßig derart versetzt werden, daß die Geschwindigkeitsmaxima der ersten Stufe 19 zumindest im wesentlichen in Phase sind mit den Geschwindigkeitsminima der zweiten Stufe. Durch die sich durch die inverse Serienschaltung ergebende Produktbildung hinsichtlich der erzielten Übersetzung ergibt sich auf diese Weise eine Vergleichmäßigung der Übertragungscharakteristik, wobei eine Optimierung dadurch möglich ist, daß die Hebelarme und die Exzentrizität der zweiten Übersetzungseinheit relativ zur ersten Übersetzungseinheit derart gewählt werden, daß die Geschwindigkeitsschwankungen in beiden Übersetzungseinheiten in ihrer Größe zumindest im wesentlichen gleich sind.

Ein stufenloses Getriebe der in Fig. 1 in seinem grundsätzlichen Aufbau gezeigten Art kann in den unterschiedlichsten Anwendungsgebieten, wie z.B. bei mechanisch oder elektrisch angetriebenen Maschinen, Motorfahrzeugen und dergleichen eingesetzt werden. Ein vorteilhafter Anwendungsfall ist der Einsatz bei Fahrrädern, wo dieses Getriebe in besonders raumspa render Ausführung problemlos in einer Hinterradnabe untergebracht werden kann.

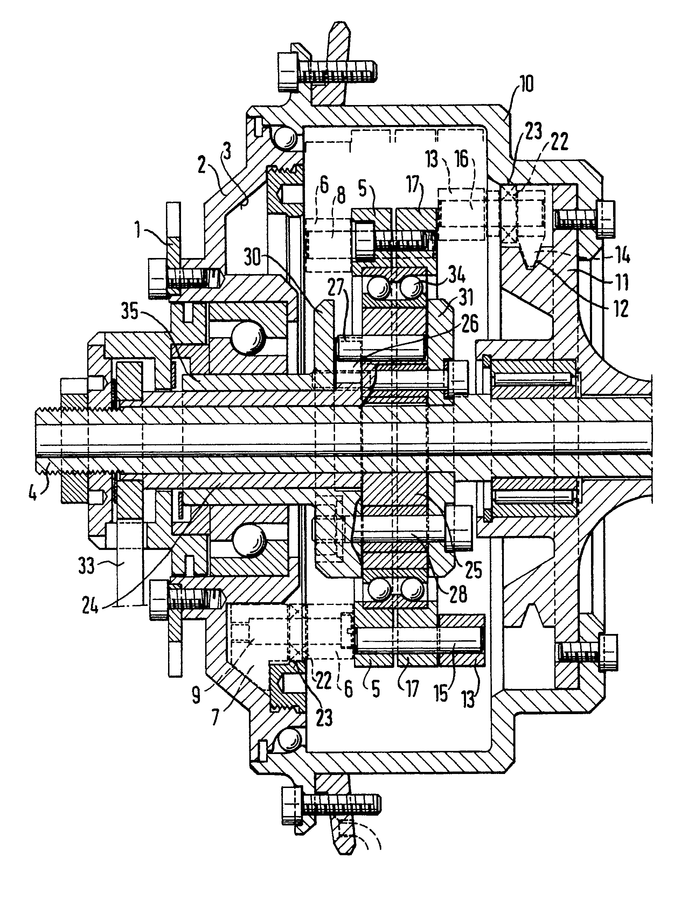

Fig. 2 zeigt einen Axialschnitt einer Hinterradnabe eines Fahrzeugs mit integriertem stufenlosen Getriebe gemäß der Erfindung. In dieser Darstellung sind zum leichteren Verständnis die gleichen Bezugszeichen wie in Fig. 1 für einander entsprechende Teile verwendet.

Ein über eine Kette antreibbares Element 1 in Form eines Zahnrads ist mit einem Flansch eines trommelförmigen Teils 2 fest verschraubt, das das Eingangsorgan des Getriebes bildet. Dieses trommelförmige Teil 2 ist über ein Kugellager bezüglich einer festen Achse 4 drehbar gelagert und im Bereich seiner Innenwandung mit der ersten Ringlaufbahn 3 versehen.

Diese Ringlaufbahn 3 wirkt mit Kuppelementen 7 in Form von in einer Laufrichtung wirksamen Klemmschuhen zusammen, welche an einem Ende von Schwenkhebeln 6 mittels Lagern 9 verschwenk bzw. kippbar gelagert sind. Das jeweils andere Ende eines jeden Schwenkhebels 6 ist über ein Schwenklager 8 an einem ersten Zwischenorgan 5 befestigt, das unter Zwischenschaltung eines Lagers 34 drehbar auf einem Exzenterelement 25 angebracht ist.

Zweckmäßigerweise sind fünf über den Umfang verteilte Schwenkhebel 6 mit zugeordneten Kuppelelementen 7 verwendet.

Die Kuppelelemente 7 sind bei der gezeigten Ausführungsform über jeweils ein Lagerorgan 22 auf einer Laufbahn 23 abstützbar.

Analog dem ersten Zwischenorgan 5 ist ebenfalls drehbar und mit dem ersten Zwischenorgan fest verbunden auf dem Exzenterelement 25 ein zweites Zwischenorgan 17 angebracht, das ebenfalls ringförmig ausgebildet ist und über Schwenklager 15 Schwenkhebel 13 trägt, an deren jeweils anderem Ende über Schwenklager 16 zweite Kuppelelemente 14 angebracht sind, die wiederum mit einer Ringlaufbahn 12 zusammenwirken, die an einem Ausgangsorgan 11 vorgesehen ist. Dieses drehbar gelagerte Ausgangsorgan 11 ist fest mit einem Nabentrommelteil verschraubt, das das angetriebene Element 10 bildet. An diesem Nabentrommelteil können Befestigungsringe für die Speichen des Hinterrads angebracht werden.

Die Einstellung der jeweils gewünschten Übersetzung erfolgt durch Verstellen des Exzenterelements 25 relativ zur festen Achse 4.

Das scheibenförmig ausgebildete Exzenterelement 25 ist zwischen zwei plattenförmigen Begrenzungsorganen 30, 31 angeordnet, welche in ihrem gegenseitigen Abstand durch Distanzbolzen festgelegt sind, wobei einer dieser Bolzen gleichzeitig eine feste Schwenkachse 28 für das Exzenterelement 25 bildet. Das Begrenzungsorgan 30 ist über einen zylinderförmigen Ansatz 35 bezüglich der Achse 4 festgelegt, und radial innerhalb dieses zylindrischen Ansatzes 35 verläuft eine Betätigungshülse 24, die an ihrem außenliegenden Ende mit einem Betätigungshebel 33 verbunden ist und an ihrem innenliegenden Ende eine Gabel 26 aufweist, die zwischen das Begrenzungsorgan 30 und das Exzenterelement 25 eingreift und mit einem Seitenzapfen 27 dieses Exzenterelementes gekuppelt ist. Durch Verschwenken der Gabel 26 kann das Exzenterelement 25 um die feste Achse 28 verschwenkt werden, wodurch zwischen der in Fig. 1 angedeuteten Drehachse 18 der rotierenden Zwischenorgane 5, 17 und der festen Achse 4 eine exzentrische Position geschaffen und damit das Übersetzungsverhältnis geändert wird.

Die Übersetzungs- und Kraftübertragungscharakteristiken dieses stufenlos arbeitenden Getriebes können durch verschiedene Parameter beeinflußt und optimiert werden.

Von wesentlicher Bedeutung sind dabei die Wahl der Durchmesser der Ringlaufbahnen 3, 12, die Wahl der Durchmesser der Schwenklagerkreise für die Schwenkhebel 6, 13 an den Zwischenorganen 5, 17 sowie die Länge der Schwenkhebel und die einstellbaren Exzentrizitäten. Ferner ist von ganz wesentlicher Bedeutung die Winkelversetzung zwischen den Kuppelelementen 7 bzw. 14 in den beiden Stufen des Getriebes, da es durch diese Winkelversetzung möglich ist, die Fluktuationen zu minimieren.

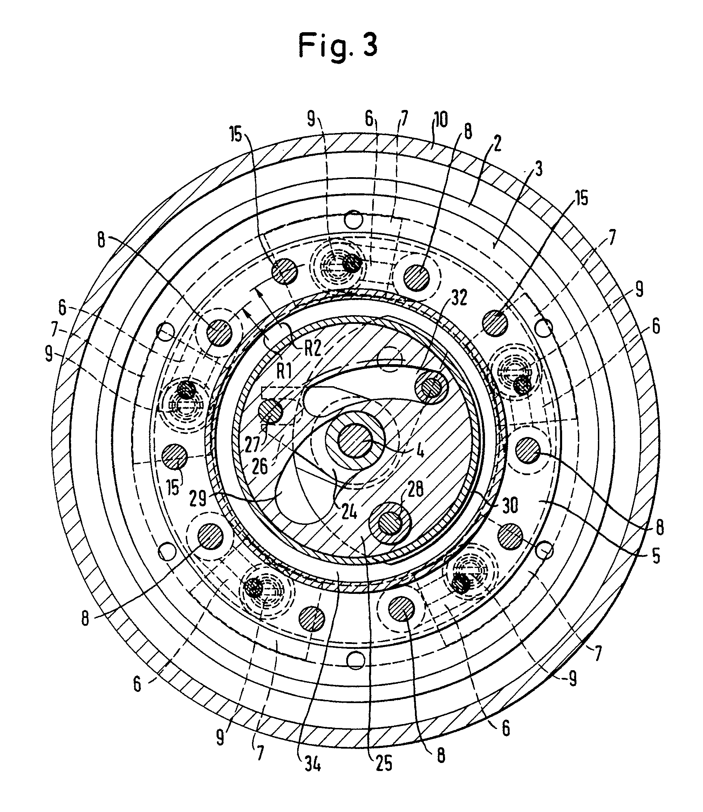

Fig. 3 zeigt einen Schnitt durch die erste Übersetzungseinheit des Getriebes nach Fig. 2, wobei sich diese Einheit im zentrierten Zustand befindet, in dem die feste Achse 4 mit der Exzenterachse zusammenfällt und das Übersetzungsverhältnis dieser Stufe 1 : 1 beträgt. Das ringförmige Zwischenorgan 5, das über das Lager 34 drehbar auf dem Exzenterelement 25 angeordnet ist, liegt dabei konzentrisch zur festen Achse 4, und demgemäß ist auch der Kreis vom Radius R1 konzentrisch zur festen Achse 4, auf dem die Schwenklager 8 für die Schwenkhebel 6 gelegen sind, an deren anderen Ende über Lager 9 die Kuppelelemente 7 angebracht sind. Die Anordnung ist bei dieser Ausgestaltung vorzugsweise so getroffen, daß sich in diesem zentrierten Zustand beide Schwenklager 8, 9 der Schwenkhebel 6 auf dem gleichen Kreis befinden.

Es ist in Fig. 3 auch zu sehen, daß die Schwenklager 15 der der zweiten Übersetzungseinheit zugeordneten Schwenkhebel auf einem etwas größeren Radius R2 gelegen sind.

Die zur Exzenter-Stellvorrichtung gehörende und mit der Betätigungshülse 24 verbundene Gabel 26 umgreift den Seitenzapfen 27 des Exzenterelements 25, das um die feste Achse 28 verschwenkbar ist. Um diese Verschwenkung zu ermöglichen, ist eine erste teilkreisförmige Ausnehmung 24 für die feste Achse 4 und eine zweite teilkreisförmige Ausnehmung 32 für einen Befestigungs- und Distanzbolzen im Exzenterelement 25 vorgesehen.

Wird die Gabel 26 im Uhrzeigersinn verschwenkt, dann führt dies zu einer exzentrischen Position des Exzenterelements 21 relativ zur festen Achse 4 und damit zu einer Erhöhung des Übersetzungsverhältnisses.

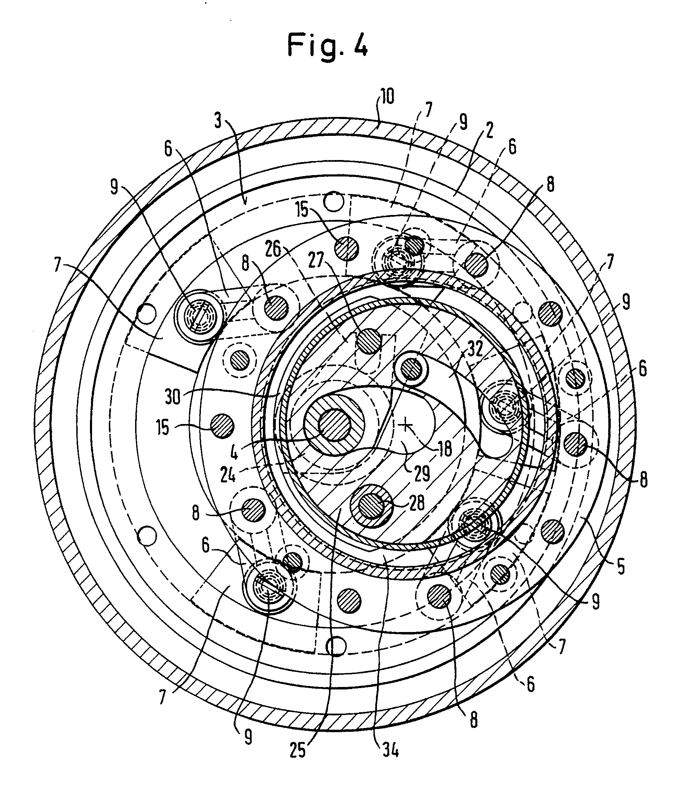

Fig. 4 zeigt die erste Übersetzungseinheit nach Fig. 3 im Zustand maximaler Exzentrizität. Dazu ist mittels der Gabel 26 das Exzenterelement 25 um die feste Achse 28 verschwenkt worden, so daß nunmehr die Achse 18 dieses Exzenterelements 25 bezüglich der festen Achse 4 exzentrisch liegt, wie dies schematisch auch in Fig. 1 gezeigt ist.

Aufgrund dieser exzentrischen Lage ergeben sich über den Umlaufwinkel von 360° betrachtet unterschiedliche Abstände zwischen den Schwenklagern 9 der Schwenkhebel 6 am Zwischenorgan 5 und der Ringlaufbahn 3, was zur Folge hat, daß die Kuppelelemente 7 nur noch auf einem begrenzten, definierten Winkelbereich nacheinander kraftübertragend wirksam werden und außerhalb dieses Bereichs die Kuppelelemente im Leerlaufzustand sind.
Dieses Funktionsprinzip ist im Detail in der französischen Patentanmeldung 88 12 584 beschrieben.

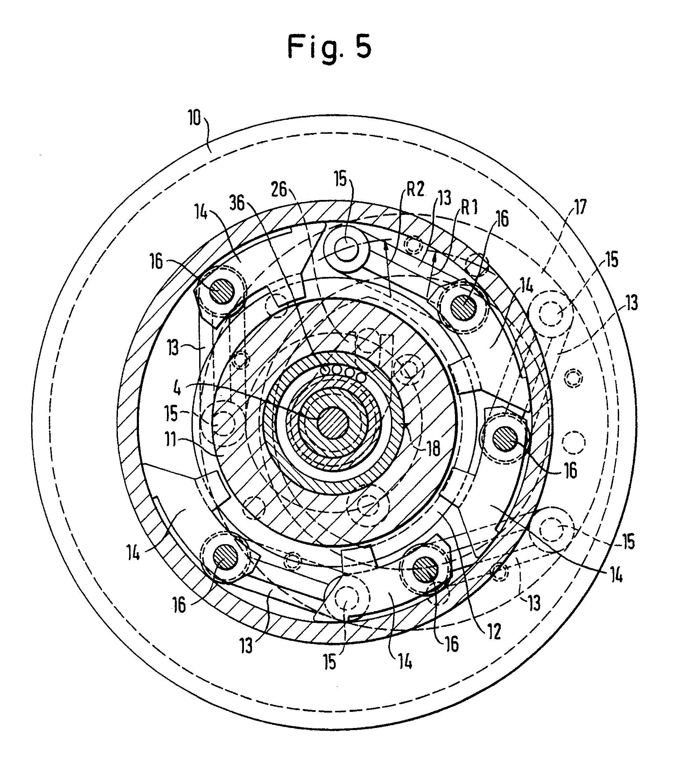

Fig. 5 zeigt einen Schnitt durch die Mittelebene der Kuppelelemente der zweiten Übersetzungseinheit, wobei sich diese zweite Übersetzungseinheit ebenfalls im Zustand maximaler Exzentrizität befindet.

Das angetriebene Element 10 ist fest verbunden mit dem Ausgangsorgan 11, das über ein Nadellager 36 bezüglich der Achse 4 drehbar gelagert und in dem die zweite Ringlaufbahn 12 ausgebildet ist, in die die Kuppelelemente 14 eingreifen. Das zweite ringförmige Zwischenorgan 17, das in der bereits erläuterten Weise auf dem Exzenterelement angeordnet ist, liegt mit seiner Achse 18 bezüglich der festen Achse 4 exzentrisch, und damit ergeben sich für die Schwenkhebel 13 und die mit ihnen verbundenen Kuppelelemente 14 während des Umlaufs unterschiedliche Eingriffsverhältnisse bezüglich der Ringlaufbahn 12. Dies führt in gleicher Weise wie bereits im Zusammenhang mit der ersten Übersetzungseinheit erläutert dazu, daß die Kuppelelemente 14 und damit auch die Schwenkhebel 13 nur innerhalb eines definierten Winkelbereichs kraftübertragend wirksam sind und sich außerhalb dieses Winkelbereichs im Leerlauf befinden.

Der kraftübertragend wirksame Winkelbereich dieser zweiten Übersetzungseinheit ist winkelmäßig bezüglich des kraftübertragenden Winkelbereichs der ersten Übersetzungseinheit versetzt angeordnet, und dadurch wird es möglich, die sich in den beiden aufeinanderfolgenden Übersetzungseinheiten ergebenden Fluktuationen bzw. Geschwindigkeitsschwankungen weitestgehend auszumitteln, so daß eine gleichförmige, von Schwankungen weitestgehend befreite Kraftübertragung sichergestellt ist.

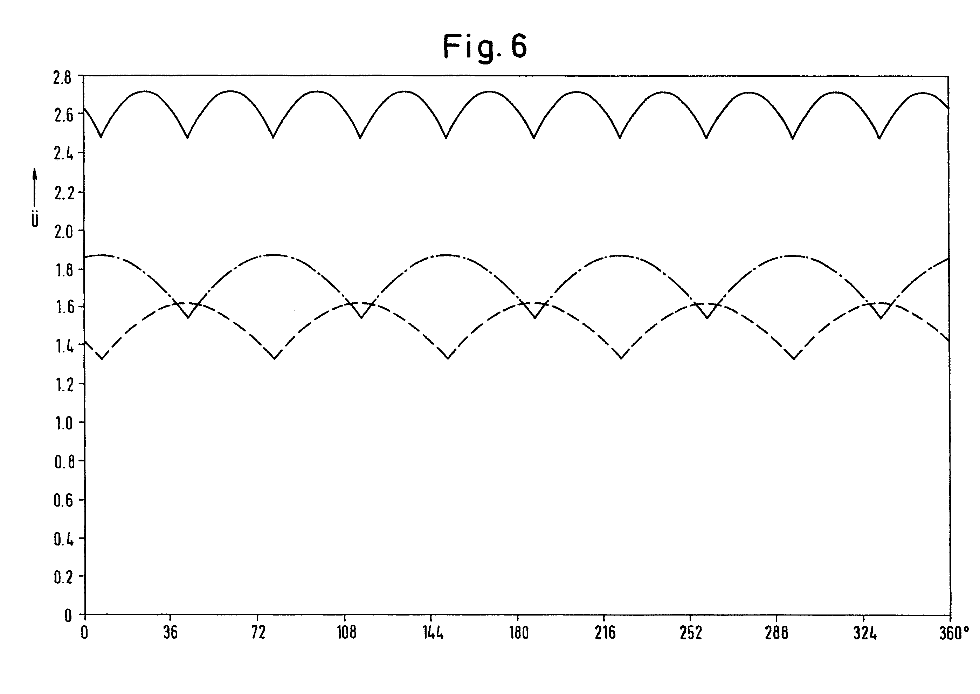

Fig. 6 zeigt in Diagrammform das Zusammenwirken zwischen erster und zweiter Übersetzungseinheit im Rahmen der inversen Serienschaltung nach der Erfindung.

Dabei sind über dem auf der Ordinate aufgetragenen Umlaufwinkel auf der Abszisse die sich ergebenden Übersetzungen aufgetragen. Der ersten Übersetzungseinheit ist dabei die strichlierte und der zweiten Übersetzungseinheit die strichpunktierte Kurve zugeordnet, während die gesamte Übersetzung in Form einer ausgezogenen Kurve dargestellt ist.

Deutlich zu erkennen sind die sich in den beiden Übersetzungsstufen ergebenden Fluktuationen, die von den aufeinanderfolgenden Eingriffen der Kuppelelemente innerhalb eines bestimmten Winkelbereichs an der zugeordneten Ringlaufbahn herrühren.

Die gesamte Übersetzung stellt das Produkt der in den beiden Stufen erzielten Einzelübersetzungen dar, und es ist deutlich zu sehen, daß diese ausgangsseitig auftretenden Fluktuationen entscheidend geringer sind als die Fluktuationen der Einzelstufen und praktisch auch nicht mehr störend in Erscheinung treten.

Dies ist eine Folge der inversen Serienschaltung, die zu einer Mittensymmetrie führt und es ermöglicht, die zweite Übersetzungseinheit bezüglich der ersten Übersetzungseinheit so auszugestalten und zu dimensionieren, daß die Fluktuationen identisch oder zumindest ähnlich sind, und die Winkelverschiebung zwischen den beiden Übersetzungseinheiten so zu wählen, daß die Maximas der Fluktuationen der ersten Übersetzungseinheit zumindest im Prinzip in Phase sind mit den Minimas der Fluktuationen der zweiten Stufe, wie dies in Fig. 6 gezeigt ist.

Bezugszeichenliste

1 Antreibendes Element
2 Eingangsorgan
3 Erste Ringlaufbahn
4 Feste Achse
5 Erstes Zwischenorgan
6 Schwenkhebel
7 Erstes Kuppelelement
8 Schwenklager
9 Schwenklager
10 Angetriebenes Element
11 Ausgangsorgan
12 Zweite Ringlaufbahn
13 Schwenkhebel
14 Zweites Kuppelelement
15 Schwenklager
16 Schwenklager
17 Zweites Zwischenorgan
18 Achse
19 Erste Übersetzungseinheit
20 Zweite Übersetzungseinheit
21 Exzenter-Stellvorrichtung
22 Lagerorgan
23 Laufbahn
24 Betätigungshülse
25 Exzenterelement
26 Gabel
27 Seitenzapfen
28 Feste Achse
29 Ausnehmung
30 Begrenzungsorgan
31 Begrenzungsorgan
32 Ausnehmung
33 Betätigungshebel
34 Lager
35 Zylindrischer Ansatz
36 Nadellager

**Ansprüche**

1. Stufenloses Getriebe für Fahrräder, Motorfahrzeuge, Maschinen und dergleichen, bestehend aus einem antreibenden und einem anzutreibenden Element, die drehbar und koaxial gelagert und über zumindest zwei aufeinanderfolgende Übersetzungseinheiten miteinander verbunden sind, wobei das antreibende Element mit dem Eingangsorgan der ersten Übersetzungseinheit und das anzutreibende Element mit dem Ausgangsorgan der jeweils letzten Übersetzungseinheit verbunden ist und jede Übersetzungseinheit ein zum jeweiligen Eingangsorgan achsparallel gelagertes, relativ dazu versetzbares Ausgangsorgan aufweist und Eingangsorgan und Ausgangsorgan jeweils über eine Mehrzahl von Schwenkhebeln miteinander gekuppelt sind, deren eines Ende an einem der beiden Organe über dessen Umfang verteilt schwenkbar gelagert ist und deren andere Enden mit in einer Laufrichtung wirksamen Kuppelelementen versehen sind, die in Abhängigkeit von der die Übersetzung bestimmenden Exzentrizität zwischen den Achsen von Eingangsorgan und Ausgangsorgan bei jedem Umlauf in einer gemeinsamen Ebene mit Teilbereichen einer am jeweils anderen Organ vorgesehenen Ringlaufbahn kraftschlüssig klemmend in Eingriff gelangen,
dadurch **gekennzeichnet,**
daß die Übersetzungseinheiten (19, 20) paarweise invers zusammengefaßt sind und jedes Einheitenpaar (19, 20) eine entweder die Organe (2, 11) mit den Ringlaufbahnen (3, 12) oder die Organe (6, 13) mit den Kuppelelementen (7, 14) gemeinsam betätigende Exzenter-Stellvorrichtung (21) aufweist.

2. Getriebe nach Anspruch 1,
dadurch **gekennzeichnet,**
daß das gleichzeitig das antreibende Element (1) bildende Eingangsorgan (2) eine erste Ringlaufbahn (3) und das das angetriebene Element (10) bildende Ausgangsorgan (11) eine zweite Ringlaufbahn (12) besitzt, daß die erste Ringlaufbahn (3) über erste, Kuppelelemente (7) tragende Schwenkhebel (6) mit einem ersten drehbar gelagerten Zwischenorgan (5) und die zweite Ringlaufbahn (12) über zweite, Kuppelelemente (14) tragende Schwenkhebel (13) mit einem zweiten drehbar gelagerten Zwischenorgan (17) verbunden ist, und daß die beiden Zwischenorgane (5, 17) in vorgebbarer Relativlage auf der gleichen Achse (18) gelagert und mittels der Exzenter-Stellvorrichtung (21) gemeinsam bezüglich der die gleiche feste Achse (4) aufweisenden Eingangs- und Ausgangsorgane (2, 11) verstellbar sind.

3. Getriebe nach Anspruch 1 oder 2,
dadurch **gekennzeichnet,**
daß die Kuppelelemente (14) der zweiten Übersetzungseinheit (20) bezüglich der Kuppelelemente (7) der ersten Übersetzungseinheit (19) bezüglich ihres kraftschlüssigen Eingriffs mit der zugehörigen Ringlaufbahn (3; 12) winkelmäßig derart versetzt sind, daß die Geschwindigkeitsmaxima der ersten Stufe (19) zumindest im wesentlichen in Phase sind mit dem Geschwindigkeitsminima der zweiten Stufe (20).

4. Getriebe nach einem der vorhergehenden Ansprüche,

dadurch **gekennzeichnet,**

daß die Größe der Exzentrizitäten (e) der den beiden Übersetzungseinheiten (19, 20) zugeordneten Zwischenorgane (5, 17) unterschiedlich ist.

5. Getriebe nach einem der vorhergehenden Ansprüche,

dadurch **gekennzeichnet,**

daß die Größe der in den beiden Übersetzungseinheiten (19, 20) zwischen den Ringlaufbahnen (3, 12) und den Zwischenorganen (5, 17) wirksam werdenden Hebelarme unterschiedlich ist.

6. Getriebe nach einem der vorhergehenden Ansprüche,

dadurch **gekennzeichnet,**

daß die Hebelarme und die Exzentrizität der zweiten Übersetzungseinheit (20) relativ zur ersten Übersetzungseinheit (19) derart gewählt sind, daß die Geschwindigkeitsschwankungen in beiden Übersetzungseinheiten (19, 20) in ihrer Größe zumindest im wesentlichen gleich sind.

7. Getriebe nach einem der vorhergehenden Ansprüche,

dadurch **gekennzeichnet,**

daß die Kuppelelemente (7, 14) aus Klemmschuhen bestehen und daß die Klemmschuhe in der ersten Übersetzungseinheit (19) konstruktiv unterschiedlich zu den Klemmschuhen in der zweiten Übersetzungseinheit (20) ausgebildet sind.

8. Getriebe nach einem der vorhergehenden Ansprüche,

dadurch **gekennzeichnet,**

daß die Klemmschuhe als ziehend freilaufende und stoßend klemmende Elemente ausgebildet sind.

9. Getriebe nach einem der vorhergehenden Ansprüche,

dadurch **gekennzeichnet,**

daß die Anzahl von Schwenkhebeln (6, 13) und Kuppelelementen (7, 14) in beiden Übersetzungseinheiten (19, 20) gleich ist.

10. Getriebe nach einem der vorhergehenden Ansprüche,

dadurch **gekennzeichnet,**

daß die die Kuppelemente (7, 14) tragenden und in den Schwenkhebeln (6, 13) gelagerten Achsen über ein Lagerorgan (22) auf einer zur festen Achse (4) koaxialen Laufbahn (23) abstützbar sind.

11. Getriebe nach einem der vorhergehenden Ansprüche,

dadurch **gekennzeichnet,**

daß die Exzenter-Verstellvorrichtung (21) eine auf der festen Achse (4) angeordnete Betätigungshülse (24) aufweist, die sich bis zu einem die beiden Zwischenorgane (5, 17) tragenden Exzenterelement (25) erstreckt und über eine Gabel (26) an einem Seitenzapfen (27) des Exzenterelements (25) angreift, welches um eine feste Achse (28) verschwenkbar gelagert ist und zumindest eine dieses Verschwenken ermöglichende teilkreisförmige Ausnehmung (29) zur Aufnahme der festen Achse (4) aufweist.

12. Getriebe nach Anspruch 11,

dadurch **gekennzeichnet,**

daß das Exzenterelement (25) zwischen zwei plattenförmigen, achsfesten Begrenzungsorganen (30, 31) angeordnet ist, deren gegenseitiger Abstand durch Distanzbolzen festgelegt ist, von denen einer die feste Schwenkachse (28) für das Exzenterelement (25) bildet und der andere eine teilkreisförmige Ausnehmung des Exzenterelements (25) durchsetzt, und daß die Gabel (26) zwischen ein Begrenzungsorgan (30) und das Exzenterelement (25) eingreift.

# Fig. 1

# Fig. 3

# Fig. 4

# Fig. 5

# Fig. 6

EP 0 411 190 A1

Europäisches
Patentamt

**EUROPÄISCHER RECHERCHENBERICHT**

Nummer der Anmeldung

EP    89 11 4383

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3300144 (P.WOLF)<br>* das ganze Dokument * | 1 | B62M9/08<br>F16H29/14 |
| A | | 2, 7-10 | |
| | --- | | |
| A | GB-A-2024964 (WHITEHEAD MOTOFIDES S.P.A.)<br>* Seite 2, Zeilen 71 - 118; Figuren 1, 2 * | 1, 2, 8 | |
| | --- | | |
| A | US-A-3892139 (T.HARRIS)<br>* Spalte 8, Zeile 57 - Spalte 9, Zeile 36; Figur 7 * | 1, 9 | |
| | --- | | |
| A | US-A-3987682 (W.ROANTREE)<br>* das ganze Dokument * | 1, 11 | |
| | --- | | |
| A | US-A-2973653 (F.RIEDL)<br>* das ganze Dokument * | 1, 2, 7 | |
| | --- | | |
| A | US-A-4277986 (C.WADDINGTON)<br>* das ganze Dokument * | 1, 11 | |
| | --- | | **RECHERCHIERTE SACHGEBIETE (Int. Cl.5)** |
| D,A | EP-A-280481 (BRIDGESTONE CYCLE CO.,LTD.)<br>* das ganze Dokument *<br>----- | 1 | B62M<br>F16H |

Der vorliegende Recherchenbericht wurde für alle Patentansprüche erstellt

| Recherchenort | Abschlußdatum der Recherche | Prüfer |
|---|---|---|
| DEN HAAG | 05 APRIL 1990 | CZAJKOWSKI A.R. |